# EUROPEAN PATENT APPLICATION

(11) **EP 4 431 169 A1**
(43) Date of publication of application: **18.09.2024**
(21) Application number: 23162494.1
(22) Date of filing: 17.03.2023
(51) Int. Cl.: B01D 9/00, B01D 11/02, B01D 11/04

(54) **METHOD OF PURIFYING CANNABINOID COMPONENTS FROM PLANT EXTRACTS**

(71) Applicant: Siegfried AG, 4800 Zofingen (CH); Contraf-Nicotex-Tobacco GmbH, 74072 Heilbronn (DE)
(72) Inventor: Van Vegten, Cornelis Hendrik, 5200 Brugg (CH); Wirz, Yannick, 4415 Lausen (CH)
(74) Representative: Isarpatent

(57) **Abstract**

The invention provides a new and effective way to isolate and purify organic compounds from hemp and/or another plant from the Cannabaceae family and/or a part of the plant.

## Description

### Field of the invention

The invention provides a new and effective way to isolate and purify organic compounds from hemp and/or another plant from the Cannabaceae family and/or a part of the plant and relates to the extraction and purification of components of cannabinoid plant extracts.

### Background of the Invention

Plant extracts of Cannabis in the family Cannabaceae are widely used in pharmaceutical products. The plant produces a large number of chemicals, including cannabinoids and several representatives of the terpenoids. The major active principle in all cannabis products is Δ9-THC (Δ9- tetrahydrocannabinol, (-)-(6aR,10aR)-6,6,9-trimethyl-3-pentyl-6a,7,8,10a-tetrahydro-6H-benzo[c]chromen-1-ol)). Other closely related substances are collectively known as cannabinoids. They include but are not limited to cannabidiol (CBD, 2-[(1R,6R)-3-methyl-6-prop-1-en-2-ylcyclohex-2-en-1-yl]-5-pentylbenzen-1,3-diol), cannabinol (CBN, 6,6,9-trimethyl-3-pentyl-benzo[c]chromene-1-ol), cannabivarin and cannabichromene and other cannabinoids, as listed exemplary below. The amounts of these substances vary within the genus, depending on species and breeding.

The need of the different substances for medicinal purposes makes it necessary to isolate pure material from the plant extract.

### State of the art

Usually, the cannabis or hemp plant is extracted with ethanol to give a first extract that will then be separated and purified.

First procedures for the purification have been described as early as 1940. Adams et al. describe a way to isolate CBD from wild hemp out of the red oil by steam distillation, washing, distillation, washing, column distillation, conversion to the bis-dinitrobenzoate and several more steps. (J.A.C.S. 62(8), 1940, 8, p 2194-2196) Different ways to isolate, for example, CBD from such plant extracts have been described in DE102018001959. These include the use of super critical CO₂ extraction methods and chromatographic methods. However, chromatographic methods are discussed as disadvantageous as the use of solvents would bear high costs for use and recovery of the solvents. This holds true even more for the use of non-polar solvents in the first extraction step due to high residual solvents in the plant material. Residual solvents in the plant material holds back the desired Cannabinoid components and lead to problems in separating the solvent from the residual plant material. Drying of the material may cause explosions of the evaporating solvents and have to be performed with care.

In a second step, the first extract is separated from residual solvent and then purified with different techniques.

Chromatographic methods are seen as too expensive for industrial application because of high solvents costs.

Even a recently published patent application US20220267290 by D'Spain describes the use of chromatographic methods for purification of cannabis extracts as state-of-the-art method, although extensive quantities of toxic solvents are needed for such a separation method, which makes it a cost intensive process. This all is the result of the fact that the direct distillation of plant extracts leads to decomposition of the substance in the mixture when distilled, due to low temperature resistance and high viscosity.

Winterizing methods describe furthermore the extraction of cannabis extracts at low temperatures in order to minimize chlorophyll and other unwanted impurities like waxes that cause problems in the distillation (WO2020028198). CN110304994 defines the above-mentioned winterization step as an extraction with ethanol at -80 to -40 °C. Energy consumption of this process again is very high and therefore limited for industrial application.

WO2020029198 further describes the very lengthy and cost intensive process of separating and purifying ingredients of cannabis extracts including at least one extraction unit, at least three refining units and one chemical conversion unit.

For further ways to isolate cannabinoid extracts, WO2021037343 is presenting a method using liquid paraffin to extract the cannabinoids.

Thermal separation by distillation is also described with several drawbacks. The thermal stability of cannabinoids is limited and therefore, the separation by distillation has several challenges to get an efficient and high yielding process. Previous publications describe decomposition of the compounds to be distilled (J.A.C.S. 62(8), 1940, 8, p 2194-2196). EP2314580 describes the short-path distillation of synthetically produced CBD with a yield of 89 %. However, when using a plant extract, the presence of waxes and chlorophyll cause the extract to show high viscosity and is therefore not suitable for direct distillation in a short-path distillation apparatus. DE102018001959 therefore suggests a specifically packed column for the distillation and to combine at least two distillations in a row.

EP3150264 is also describing that short-path distillation is a possible way to purify hemp or cannabis extracts. However, it is described that a second distillation is needed, and even a column is used in the distillation. Furthermore, the preferred solvents to be used (CO₂ or organic solvents) show that not every solvent for the primary extract delivers a suitable extract for distillation. Likewise, EP1326598B1 describes the primary extracts with the aid of solvents as "dark brown viscous and sticky oil" with a content of up to 65 % of a hallucinogenic agent. WO0025127 also describes that, when using a non-polar solvent for the primary extraction, a column chromatography is needed prior to the distillation step.

In the above methods, either a chromatographic separation or a further distillation of a secondary extract after distilling the secondary extract or at least a part thereof is needed. Preferably, also a winterizing step should be avoided. There thus remains the need for efficient compound separation from hemp or cannabis plants or extracts thereof, particularly where the extraction from hemp and/or another or cannabis plant from the Cannabaceae family or parts thereof is not particularly restricted. Particularly, it is an object of the present invention to provide methods of providing at least one organic compound from hemp and/or another plant from the Cannabaceae family, preferably the genus Cannabis, and/or a part of the plant, wherein a second distillation of the residue of the extract after removing of the extraction solvent, a chromatographic method, and/or repeated re-crystallization can be avoided, as well as also a winterizing step.

### Summary of the invention

The present invention offers a novel method for the separation of compounds from hemp or other cannabis plant extracts. It also offers a method for isolation of one single wanted product from other unwanted products that may occur in a primary extract. Particularly it is a problem underlying the invention to provide a method which achieves obtaining single compounds from hemp or cannabis plants with high yield and purity. To solve the problem of waxes and chlorophyll in primary extracts, that make the primary extract unsuitable for direct distillation, the primary extract is treated with a non-polar solvent. This procedure separates the unwanted substance in the primary extract from the cannabinoids. The pretreated primary extract is then subjected to a distillation, particularly a single short-path distillation.

In a first aspect, the present invention relates to a method for separation of at least one organic compound from a primary extract, obtained from hemp and/or another or cannabis plant from the Cannabaceae family, preferably the genus Cannabis, and/or a part of the plant, comprising:
- obtaining or providing the primary extract, particularly obtained from a first extraction step;
- extracting the primary extract in a second extraction step with a non-polar solvent to obtain a secondary extract, comprising the non-polar solvent and the at least one organic compound; and
- distilling the secondary extract to obtain the at least one organic compound.

A further aspect of the invention relates to a method for separation of at least one organic compound from hemp and/or another plant from the Cannabaceae family, preferably the genus Cannabis, and/or a part of the plant, comprising:
- extracting the plant and/or part of the plant in a first extraction step to obtain a primary extract;
- extracting the primary extract in a second extraction step with a non-polar solvent to obtain a secondary extract, comprising the non-polar solvent and the at least one organic compound;
- optionally distilling off the non-polar solvent at least partially from the secondary extract; and
- distilling the secondary extract to obtain the at least one organic compound, particularly wherein the distilling of the secondary extract comprises subjecting the secondary extract to a short-path distillation apparatus,
wherein the first extraction step is carried out with a solvent and/or means different from the non-polar solvent used in the second extraction step.

Also disclosed is a method for isolating cannabidiol (CBD) and/or 9-tetrahydrocannabinol (THC) from a primary extract from hemp and/or another plant from the Cannabaceae family, preferably the genus Cannabis, and/or a part of the plant, consisting of the following steps:
a. extracting the primary extract in a second extraction step with an alkane having 5 to 10 carbon atoms, preferably heptane, to produce an organic phase and a first residue;
b. separating the organic phase from the first residue;
c. distilling off the alkane from the organic phase to obtain a second residue;
d. subjecting the second residue from step c. to a short-path distillation to obtain a distillate; and
e. subjecting the distillate of step d to a crystallization, preferably in pentane and/or petrol ether, to obtain the cannabidiol and/or 9-tetrahydrocannabidiol.

Further aspects and embodiments of the invention are disclosed in the dependent claims and can be taken from the following description, figures and examples, without being limited thereto.

### Figures

The enclosed drawings should illustrate embodiments of the present invention and convey a further understanding thereof. In connection with the description they serve as explanation of concepts and principles of the invention. Other embodiments and many of the stated advantages can be derived in relation to the drawings. The elements of the drawings are not necessarily to scale towards each other. Identical, functionally equivalent and acting equal features and components are denoted in the figures of the drawings with the same reference numbers, unless noted otherwise.

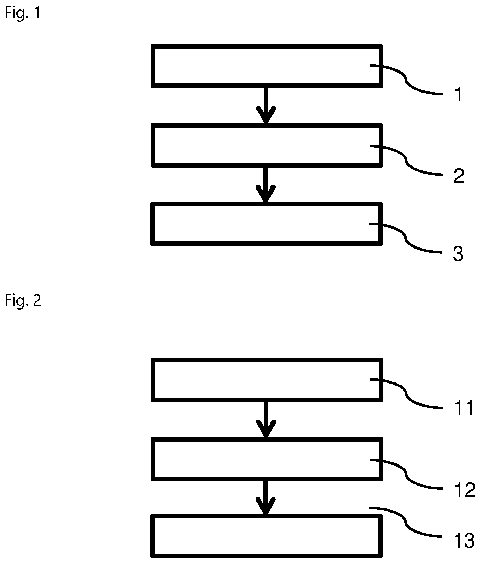

Figs. 1 to 3 depict schematically methods of the present invention.

### Description of the invention

### Definitions

Unless defined otherwise, technical and scientific terms used herein have the same meaning as commonly understood by one of ordinary skill in the art to which this invention belongs.

It is understood that a primary extract, or primary oil, is the result of a first extraction of hemp or cannabis plant material with any extraction solvent. The solvent of the first extract is not limited to any special solvent, if not otherwise described.

An extraction is to be understood as a method step in which either solid material or a primary extract or oil is extracted with a solvent in which most, but not all of the contained compounds are dissolved. The residue to be extracted may contain other solvents from primary extractions or may be mixed with other solvents before extraction.

Pretreatment or pre-extraction describes the extraction of a primary extract, here in a second extraction step, before e.g. subjection to distillation or crystallization. The pretreatment will provide a secondary extract and usually an insoluble residue.

Percentage by Weight (wt%) describes the mass fraction of a substance within a mixture as the ratio of weight of that substance in g to the total weight of the mixture in g. Amounts within the present invention are given in wt%, unless stated otherwise or clear from context.

If a ratio is given in area % (a%), the value arises from an HPLC analysis and shows the percentage of peak area in relation to total area of peaks under interest. These values are under the assumption that the response factor is the same for all substances and the detector signal is linear. Alkyl describes a linear, branched and/or cyclic hydrocarbon residue. Whenever a specific alkyl like hexane or heptane is used, the expression stands for the linear, branched and/or cyclic compound or a mixture thereof if not otherwise described.

The term cannabis plant relates to a genus of flowering plants in the family cannabaceae. Three recognized species are c. sativa, c. indica, and c. ruderalis. The term hemp plant (hemp) means a botanical class of c. sativa cultivars grown specifically for industrial or medicinal use. Hemp typically has lower concentrations of total THC and may have higher concentrations of cannabidiol (CBD). Both terms encompass the whole plant or parts thereof.

Before the invention is described in exemplary detail, it is to be understood that this invention is not limited to the particular component parts of the process steps of the methods described herein as such methods may vary. It is also to be understood that the terminology used herein is for purposes of describing particular embodiments only, and is not intended to be limiting. It must be noted that, as used in the specification and the appended claims, the singular forms "a," "an" and "the" include singular and/or plural referents unless the context clearly dictates otherwise. For example, the term "a" as used herein can be understood as one single entity or in the meaning of "one or more" entities. It is also to be understood that plural forms include singular and/or plural referents unless the context clearly dictates otherwise. It is moreover to be understood that, in case parameter ranges are given which are delimited by numeric values, the ranges are deemed to include these limitation values.

As used herein, the terms "comprises", "comprising", "contains", "containing", "includes", "including", "has", "having" or any other variation thereof, are intended to cover a non-exclusive inclusion. For example, a process, method, article, or apparatus that comprises a list of elements is not necessarily limited to only those elements, but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z. The use of ordinal number terminology (i.e., "first", "second", "third", "fourth", etc.) is solely for the purpose of differentiating between two or more items and, unless explicitly stated otherwise, is not meant to imply any sequence or order or importance to one item over another or any order of addition.

The term "cannabinoid" refers to both its carboxylic acid form and its decarboxylated form. Exemplary cannabinoids as organic compounds that can be separated in methods of the present invention are the following: THC refers to tetrahydrocannabinol (also (-)-Δ⁹-trans-tetrahydrocannabinol (Δ⁹-THC, Δ⁹-THC-C₅), while THCA refers to the carboxylated form of THC (tetrahydrocannabinolic acid). CBD refers to cannabidiol (also (CBD-C₅), while CBDA (cannabidiolic acid) refers to the carboxylated form of CBD. Other cannabinoid constituents include, besides THC, tetrahydrocannabinol types like Δ⁹-tetrahydrocannabinol-C₄ (Δ⁹-THC-C₄), Δ⁹-tetrahydrocannabivarin (Δ⁹-THCV-C₃), Δ⁹-tetrahydrocannabiorcol (Δ⁹-THCO-C_{I}), Δ⁹-tetrahydrocannabinolic acid (Δ⁹-THCA-C₅ A), Δ⁹-tetrahydrocannabinolic acid B (Δ⁹-THCA-C₅ B), Δ⁹-tetrahydrocannabinolic acid-C₄ A and/or B (Δ⁹-THCA-C₄ A and/or B), Δ⁹-tetrahydrocannabivarinic acid A (Δ⁹-THCVA-C₃ A), Δ⁹-tetrahydrocannabiorcolic acid A and/or B (Δ⁹-THCOA-C_{I} A and/or B), (-)-Δ⁸-trans-(6aR,10aR) tetrahydrocannabinol (Δ⁸-THC-C₅), (-)-Δ⁸-trans-(6aR,10aR)-tetrahydrocannabinolic acid A (Δ⁸-THCA-C₅ A), and (-)-(6aS,10aR)-Δ⁹-tetrahydrocannabinol ((-)-cis-Δ⁹-THC-C₅); cannabigerol (CBG, (E)-CBG-C₅) and cannabigerol types like cannabigerol monomethylether ((E)-CBGM-C₅ A), cannabinerolic acid A ((Z)-CBGA-Cs A), cannabigerovarin ((E)-CBGV-C₃), cannabigerolic acid A ((E)-CBGA-C₅ A), cannabigerolic acid A monomethylether ((E)-CBGAM-C₅ A), and cannabigerovarinic acid A ((E)-CBGVA-C₃ A); cannabichromene (CBC, CBC-C₅) and cannabichromene types like cannabichromenic acid A (CBCA-Cs A), cannabichromevarin (CBCV-C₃), and cannabichromevarinic acid A (CBCVA-C₃ A) ; cannabidiol types like cannabidiol monomethylether (CBDM-C₅), cannabidiol-C4 (CBD-C₄), cannabidivarin (CBDV-C₃), cannabidiorcol (CBD-C₁), cannabidiolic acid (CBDA-C₅), and cannabidivarinic acid (CBDVA-C₃); cannabinodiol (CBND, CBND-C₅) and cannabionodiol types like cannabinodivarin (CBND-C₃); cannabielsoin (5aS,6S,9R,9aR)-cannabielsoin (CBE-C₅, CBE) and cannabielsoin types like (5aS,6S,9R,9aR)-C₃-cannabielsoin (CBE-C₃), (5aS,6S,9R,9aR)-cannabielsoic acid A (CBEA-Cs A), (5aS,6S,9R,9aR)-cannabielsoic acid B (CBEA-Cs B), (5aS,6S,9R,9aR)-C3-cannabielsoic acid B (CBEA-Cs B), cannabiglendol-C3 (OH-iso-HHCV-C₃), dehydrocannabifuran (DCBF-C₅), and cannabifuran (CBF-C₅); cannabicyclol ((±)-(1aS,3aR,8bR,8cR)-cannabicyclol (CBL-C5, CBL) and cannabicyclol types like (±)-(1aS,3aR,8bR,8cR)-cannabicyclolic acid A (CBLA-C₅ A), (±)- (1aS, 3aR, 8bR, 8cR) - cannabicyclovarin (CBLV-C₃); besides cannabinol (CBN-C₅, CBN), cannabinol types like cannabinol-C4 (CBNC₄), cannabivarin (CBN-C₃), cannabinol-C2 (CBN-C₂), cannabiorcol (CBN-C_{I}), cannabinolic acid A (CBNA-Cs A) cannabinolmethylether (CBNM-C₅); cannabitriol ((+)- (9S, 10S) -cannabitriol ((+) -trans-CBT-C₅, CBT)) and cannabitriol types like (-)-(9R, 10R)-trans-cannabitriol ((-) -trans-CBT-C₅),), (±)- (9R, 10S/9S, 10R) -cannabitriol ( (±) -cis-CBT-C₅), (-)( 9R,10R)-trans[10-o-ethyl-cannabitriol] ( (-)-trans-CBT-OEt-C₅), (±)-(9R,10R/9S,10S)-cannabitriol-C3 ( (±)-trans-CBT-C₃) ,8,9- dihydroxy-Δ6a(10a) tetrahydrocannabinol (8,9-Di-OH-CBT-C₅), cannabidiolic acid A (CBDA-Cs 9-oH-CBT-C₅ ester), (-)(6aR,9D,10S,10aR)-9,10-dihydroxy-hexahydrocannabinol, cannabiripsol cannabiripsol-C₅, (-)-6a 1 7 1 10a-trihydroxy-D9-tetrahydrocannabinol ( (-)-cannabitetrol), 10-oxo-Δ6a(10a) tetrahydrocannabinol (OTHC); Isocannabinoids: (-)-Δ7-trans-(1R, 3R, 6R)isotetrahydrocannabinol, (±)-Δ7-1,2-cis-(1R, 3R, 6S/1S, 3S, 6R)- isotetrahydrocannabi varin 1 (-) Δ7-trans- ( 1R, 3R, 6R)- isotetrahydrocannabivarin; cannabicitran (CBT, CBT-C₅) and cannabicitran types; and cannabichromanon (CNCN, CBCN-C₅) and cannabichromanon types like cannabichromanon-C₃ (CBCN-C₃) and cannabicoumaronon (CBCON-C₅). Besides the above-mentioned cannabinoids, their associated carboxylic acids are also covered by the present subject-matter and can be found in the crude drug. These carboxylic acids are biosynthetic precursors. Cannabis preparations exert a large number of therapeutic effects, including antispastic, analgesic, antiemetic, neuroprotective and anti-inflammatory effects, and effects in psychiatric illnesses (Grotenhermen F, Mtiller-Vahl K: The therapeutic potential of cannabis and cannabinoids. Dtsch Arztebl Int 2012; 109 (29-30): 495-501. DOI:10.3238/arztebl.2012.0495).

Short-path distillation is a distillation technique that involves the distillate traveling a short distance, often only a few centimeters, and is normally done at reduced pressure. A classic example would be a distillation involving the distillate traveling from one glass bulb to another, without the need for a condenser separating the two chambers. The advantage of short-path distillation is that the heating temperature can be considerably lower at reduced pressure than the boiling point of the liquid at standard pressure, and the distillate only has to travel a short distance before condensing. A short path ensures that little compound is lost on the sides of the apparatus. To increase the evaporation rate without increasing temperature there are several modern techniques that increase the surface area of the liquid such as thin film, wiped film or 'wiper' film, and rolled film, all of which involve mechanically spreading a film of the liquid over a large surface. During the short path distillation different fractions may be collected that contain wanted and unwanted products. The products may thus be separated.

In a first aspect, the present invention relates to a method for separation of at least one organic compound, particularly at least one of the above cannabionoids, more particularly cannabinol and/or THC, from a primary extract, obtained from hemp and/or another or cannabis plant from the Cannabaceae family, preferably the genus Cannabis - including the genera Cannabis (with the species Cannabis sativa, C. indica, and C. ruderalis.), Humulus and Celtis, and/or a part of the plant, comprising:
- obtaining or providing the primary extract, particularly obtained from a first extraction step;
- extracting the primary extract in a second extraction step with a non-polar solvent to obtain a secondary extract, comprising the non-polar solvent and the at least one organic compound;
- optionally distilling off the non-polar solvent at least partially from the secondary extract; and
- distilling the secondary extract or at least a part thereof to obtain the at least one organic compound.

In the method of the first aspect, the obtaining or providing the primary extract is not particularly restricted. Particularly the primary is obtained from a first extraction step. This first extraction step in the following is also called a preparation of a primary extract.

There are different ways to prepare a primary extract (oil) from hemp and/or another or cannabis plant from the Cannabaceae family, preferably the genus Cannabis, and/or a part of the plant. Table 1 shows different ways with advantages and disadvantages.

**Table 1 Comparison of different ways to extract compounds into a primary oil or primary extract:**

| Extraction method | Advantages | Disadvantage | Content and nature of primary extract |
|---|---|---|---|
| Super critical CO₂ | →No solvent to be disposed | →Expensive | →High content of cannabinoids |
| | | →Technical know-how necessary | |
| | →Low thermic stress | | →High content of acidic forms of cannabinoids |
| Ethanol | →Cheap | →Many unwanted substances | →Viscous |
| | →Easy | | →Waxes and chlorophyll present |
| | | →Very viscous, distillation complex | |
| | | | →High content of cannabinoids |
| Cryogenic Ethanol | →No filtration | →Small amount of unwanted substances | →High content of cannabinoids |
| | →No winterization necessary | | |
| | →No activated carbon | | |
| Lipid extraction | →Cheap | →Separations from oils is complex | →Low concentration of cannabinoids |
| | →Nontoxic | | |
| | →Easy | →Low concentration of cannabinoids | |
| Aprotic organic solvents (e.g. alkanes) | →High number of compounds in extract | →High residual solvents in biomass | →High content of non-polar compounds and derivatives of THC and CBD. |
| | | →Risk of explosions when drying the residue | |
| | | →Health related issues when inhaled | →High content of chlorophyll. |

According to certain embodiments, the primary extract is prepared from an ethanolic extraction that is not cryogenic. According to certain embodiments, the first extraction is an extraction with ethanol. According to certain embodiments, the first extraction is carried out with carbon dioxide. According to certain embodiments, the primary extract is obtained by the steps of:
- extracting hemp and/or another plant from the Cannabaceae family, and/or the part of the plant, in a first extraction step to obtain the primary extract.

According to certain embodiments, the primary extract is obtained by the steps of:
- providing hemp and/or another plant from the Cannabaceae family, preferably the genus Cannabis, and/or a part of the plant; and
- extracting the hemp and/or another plant from the Cannabaceae family, and/or the part of the plant, in a first extraction step to obtain the primary extract.

The providing hemp and/or another plant from the Cannabaceae family, preferably the genus Cannabis, and/or a part of the plant, is not particularly restricted. Also the extracting of hemp and/or another plant from the Cannabaceae family, and/or the part of the plant, in a first extraction step to obtain the primary extract is not particularly restricted, and the extraction can be e.g. carried out by any of the methods in Table 1. According to certain embodiments, the first extraction step is carried out with ethanol and/or carbon dioxide. According to certain embodiments, the first extraction step is carried out with ethanol. In the invention, the primary extract may be achieved by one of the procedures known in the art. For best results, the extract should be achieved by extraction of the plant material with ethanol, yielding an ethanolic primary extract. For the isolation and purification of the at least one organic compound from this, e.g. ethanolic, primary extract, the primary extract is extracted prior to distillation using a non-polar solvent in the second extraction step.

According to certain embodiments, the first extraction step is performed at temperatures above -30 °C, preferably above -20 °C, further preferably above 0°C. Particularly, yield can be increased at higher temperature, and the present invention enables distilling of the extract as it tolerates higher amounts of unwanted by-products in the primary extract. In order to save costs, it is preferred that the primary extraction, e.g. with ethanol, is performed at - comparatively - elevated temperatures. It is known that the use of cooled ethanol may reduce the occurrence of unwanted compounds in the primary extract. Using the present invention, it is not necessary to use this technique. Therefore, extraction temperatures for the primary extraction may be above -30 °C, above -20 °C or even above 0 °C. Another preferred primary extract that can be used in the present invention has been obtained at room temperature (20 - 25°C), i.e. the first extraction step is carried out at room temperature (20-25°C).

The extraction of the primary extract in a second extraction step with a non-polar solvent to obtain a secondary extract, comprising the non-polar solvent and the at least one organic compound is also not particularly restricted. The non-polar solvent is not particularly restricted. In the present invention, the primary extract is extracted prior to distillation using a non-polar solvent. According to certain embodiments, the non-polar solvent contains one or more linear, branched and/or cyclic alkyl compounds, preferably one or more linear and/or branched alkyl compounds. The solvent is preferably a linear or branched alkyl compound or mixtures of such compounds. The non-polar solvent is more preferably a linear or branched C5-C10 alkyl compound or a mixture of such compounds. According to preferred embodiments, the non-polar solvent (to be used for the pretreatment or extraction of the primary, e.g. ethanolic, extract) contains pentane, hexane, and/or heptane, i.e. the solvent to be used for the pretreatment or extraction of the primary extract contains pentane, hexane or heptane or a mixture thereof. In a most preferred embodiment of the invention, the solvent to be used for the pretreatment or extraction of the primary extract contains heptane, particularly is heptane.

The results of the investigation of the inventors have shown that for the pretreatment or pre-extraction of the primary extract it is favorable to perform the same at temperatures of 20°C or more, e.g. more than 20 °C. Even better results have been achieved at temperatures of 30°C or more, e.g. more than 30 °C. A preferred temperature for the pretreatment of the primary extract is 40°C or more, e.g. above 40 °C. A further preferred temperature for the pretreatment of the primary extract is 50°C or more, e.g. above 50 °C. Thus, according to certain embodiments, the second extraction step with the non-polar solvent is performed and the second extract is obtained at a temperature of 20 °C or more, preferably 30 °C or more, more preferably 40 °C or more, and most preferred 50 °C or more. According to certain embodiments, the second extraction step is carried out at a temperature at or below the boiling point of the non-polar solvent.

According to certain embodiments, the ratio of the non-polar solvent to the primary extract is 6.5 or lower, preferably 6 or lower, further preferably 4 or lower.

According to certain embodiments, the secondary extraction step provides an organic phase as the secondary extract and a first residue, wherein the organic phase is separated from the first residue and the organic phase - as a part of the secondary extract - is distilled to obtain the at least one organic compound. Also in such instance, the non-polar solvent can be distilled off at least partially from the organic phase. According to certain embodiments, the non-polar solvent is at least partially removed from the organic phase prior to the distillation.

According to certain embodiments, the at least one organic compound is cannabidiol and/or THC, particularly cannabidiol, and the second extraction step is carried out with an alkane having 5 to 10 Carbon atoms, preferably pentane, hexane and/or heptane, further preferably heptane. Although it could be shown that most of the organic compounds will be delivered into the solution of the second extract, resulting from the extraction of the primary extract, the invention is preferably used for the purification of CBD.

In the method of the first aspect, the non-polar solvent can be distilled off at least partially from the secondary extract prior to distilling the secondary extract, or rather the remaining part thereof. However, such a pre-distilling of the non-polar solvent is not necessary in the present invention. According to certain embodiments, the non-polar solvent is at least partially or substantially totally (i.e. at least 95 vol.% of the total volume of the non-polar solvent) or totally distilled off prior to obtaining the at least one organic compound by distilling. According to certain embodiments, the non-polar solvent is not distilled off prior to distilling the secondary extract, i.e. the secondary extract is directly distilled after extracting the primary extract in the second extraction step.

The distilling the secondary extract or at least a part thereof to obtain the at least one organic compound is furthermore also not particularly restricted.

According to certain embodiments, the distilling of the secondary extract or at least a part thereof (if the non-polar solvent is at least partially distilled off) comprises subjecting the secondary extract or at least a part thereof to a short-path distillation apparatus, i.e. carrying out a short-path distillation of the secondary extract or a part thereof. In a preferred short-path distillation, a thin film of the feed is evenly divided over the inside wall of the equipment by means of a set of rotating wipers. According to certain embodiments, a short-path distillation setup is used involving the distillate traveling from one glass bulb to another, wherein in the center of the cylindrical set-up, a cooling coil is located, providing the point at which the distillate condenses, and flows down towards its collection point. In such set-up, those parts of the feed which are not distilled, flow down towards the effluent side of the bottom fraction. According to certain embodiments, short-path distillation is carried out in a pressure range of 0.001 to 1.5 HPa, and the cooling coil is at temperatures at least above the melting point of the condensate. Exemplary conditions can be: Twall = 150- 170 °C, Tcoil = 75 °C, Tfeed = 95 °C, Wipers @ 415 rpm, feed rate: 1-10 mL/min, p = 0.01 - 1.3 mbar.

According to certain embodiments, the at least one organic compound is crystallized after the distillation of the secondary extract or part thereof. The crystallized at least one organic compound then can be suitably separated and/or washed. Crystallization is not particularly restricted, and can e.g. involve adding seeding crystals. Separation and/or washing can be suitably carried out according to the obtained at least one organic compound and can be suitably adapted to the at least one organic compound. For example, crystallization can be carried out in a suitable non-polar solvent, e.g. a linear or branched C5-C10 alkane, e.g. pentane.

According to certain embodiments, the method of the first aspect consists of the following steps, starting from a primary extract:
- obtaining or providing the primary extract, particularly obtained from a first extraction step;
- extracting the primary extract in a second extraction step with a non-polar solvent to obtain a secondary extract, comprising the non-polar solvent and the at least one organic compound;
- optionally distilling off the non-polar solvent at least partially from the secondary extract;
- distilling the secondary extract or at least a part thereof to obtain the at least one organic compound;
- optionally crystallizing the at least one organic compound, optionally followed by separating and/or washing the crystallized at least one organic compound.

According to certain embodiments, the at least one organic compound is crystallized after the distillation of the secondary extract or part thereof. The crystallized at least one organic compound then can be suitably separated and/or washed.

According to certain embodiments, the method of the first aspect consists of the following steps, starting from a primary extract:
- obtaining or providing the primary extract, particularly obtained from a first extraction step;
- extracting the primary extract in a second extraction step with a non-polar solvent to obtain a secondary extract, comprising the non-polar solvent and the at least one organic compound;
- distilling the secondary extract or at least a part thereof to obtain the at least one organic compound;
- optionally crystallizing the at least one organic compound, optionally followed by separating and/or washing the crystallized at least one organic compound.

Fig. 1 depicts schematically a method of the first aspect. Following the step of obtaining or providing the primary extract 1, the step of extracting the primary extract in a second extraction step with a non-polar solvent to obtain a secondary extract, comprising the non-polar solvent and the at least one organic compound, 2 is carried out, followed by the step of distilling the secondary extract or at least a part thereof to obtain the at least one organic compound 3.

Further disclosed is a method for separation of at least one organic compound from hemp and/or another plant from the Cannabaceae family, preferably the genus Cannabis, and/or a part of the plant, comprising:
- optionally providing hemp and/or another plant from the cannabaceae family, and/or a part of the plant;
- extracting the plant and/or part of the plant in a first extraction step to obtain a primary extract;
- extracting the primary extract in a second extraction step with a non-polar solvent to obtain a secondary extract, comprising the non-polar solvent and the at least one organic compound;
- optionally distilling off the non-polar solvent at least partially from the secondary extract; and
- distilling the secondary extract to obtain the at least one organic compound, particularly wherein the distilling of the secondary extract comprises subjecting the secondary extract to a short-path distillation apparatus,
- optionally crystallizing the at least one organic compound, optionally followed by separating and/or washing the crystallized at least one organic compound,
wherein the first extraction step is carried out with a solvent and/or means different from the non-polar solvent used in the second extraction step.

According to certain embodiments, the method of the second aspect consists of the following steps:
- optionally providing hemp and/or another plant from the Cannabaceae family, and/or a part of the plant;
- extracting the plant and/or part of the plant in a first extraction step to obtain a primary extract;
- extracting the primary extract in a second extraction step with a non-polar solvent to obtain a secondary extract, comprising the non-polar solvent and the at least one organic compound;
- optionally distilling off the non-polar solvent at least partially from the secondary extract; and
- distilling the secondary extract to obtain the at least one organic compound, particularly wherein the distilling of the secondary extract comprises subjecting the secondary extract to a short-path distillation apparatus,
- optionally crystallizing the at least one organic compound, optionally followed by separating and/or washing the crystallized at least one organic compound,
wherein the first extraction step is carried out with a solvent and/or means different from the non-polar solvent used in the second extraction step.

The respective steps are as disclosed for the method of the first aspect, to which reference for the sake of conciseness.

In Fig. 2, the method of the second aspect is schematically shown. Following a step of extracting the plant and/or part of the plant in a first extraction step to obtain a primary extract 11 is a step of extracting the primary extract in a second extraction step with a non-polar solvent to obtain a secondary extract, comprising the non-polar solvent and the at least one organic compound 12. Afterwards, a step of distilling the secondary extract to obtain the at least one organic compound 12 is carried out, particularly wherein the distilling of the secondary extract comprises subjecting the secondary extract to a short path distillation apparatus.

Also disclosed in a third aspect is a method for isolating cannabidiol (CBD) and/or 9-tetrahydrocannabinol (THC) from a primary extract from hemp and/or another plant from the Cannabaceae family, preferably the genus Cannabis, and/or a part of the plant, consisting of the following steps:
a. extracting the primary extract in a second extraction step with an alkane having 5 to 10 C atoms, preferably heptane, to produce an organic phase and a first residue;
b. separating the organic phase from the first residue;
c. distilling off the alkane from the organic phase to obtain a second residue;
d. subjecting the second residue from step c. to a short-path distillation to obtain a distillate; and
e. subjecting the distillate of step d. to a crystallization, preferably in pentane and/or petrol ether, to obtain the cannabidiol and/or 9-tetrahydrocannabidiol.

According to certain embodiments, the method of the third aspect consists of the steps of
a. extracting the primary extract in a second extraction step with an alkane having 5 to 10 C atoms, preferably heptane, to produce an organic phase and a first residue;
b. separating the organic phase from the first residue;
c. distilling off the alkane from the organic phase to obtain a second residue;
d. subjecting the second residue from step c. to a short-path distillation to obtain a distillate; and
e. subjecting the distillate of step d. to a crystallization, preferably in pentane and/or petrol ether, to obtain the cannabidiol and/or 9-tetrahydrocannabidiol.

After crystallization, separation and/or washing can be suitably carried out.

Steps a. to e. are not particularly restricted and can be carried out analogously to the corresponding steps in the methods of the first and/or second aspect.

An exemplary method for the extraction of CBD from a primary extract comprises the following steps:
a. Extraction of a primary extract with heptane
b. Separation of the heptane phase from the residue
c. Distilling off the heptane from the heptane phase
d. Subjecting the residue of the heptane phase from step c. to a short path distillation
e. Subjecting the distillate of step d to a crystallization in pentane or petrol ether.

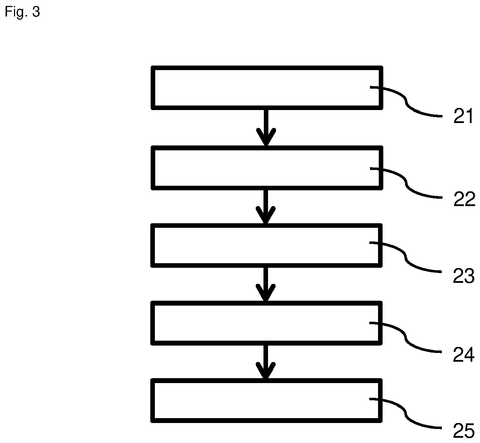

The method of the third aspect is schematically depicted in Fig. 3. The step of extracting the primary extract in a second extraction step with an alkane having 5 to 10 C atoms 21 is followed by the step of separating the organic phase from the first residue 22, followed by the step of distilling off the alkane from the organic phase to obtain a second residue 23, followed by the step of subjecting the second residue to a short path distillation to obtain a distillate 24, followed by the step of subjecting the distillate to a crystallization 25.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

### Examples

The present invention will now be described in detail with reference to several examples thereof. However, these examples are illustrative and do not limit the scope of the invention.

The state of the art show that the cheapest extracts are ethanolic extracts. Besides high content of cannabinoids, these extracts also show the highest amount of unwanted compounds. Therefore the inventors focused on these extracts. Only primary extracts with ethanol as the extraction solvent have been used in the experiments. An exemplary process of extraction with ethanol is given in US 2020/0188812 A1, which is made reference to with regard to the extraction of hemp and/or another plant from the Cannabaceae family, and or parts thereof.

### Example 1 (Comparative Example)

Direct distillation of primary extract.

A short-path distillation apparatus was charged with ca. 150 g of primary extract (residual solvents < 3%, CBD content of 66.7 wt%). The extract and cooling coil were heated to 60 °C, with the jacket temperature of the short-path distiller set at 75 °C. The pressure was reduced to 0.01 mbar.

After stable conditions were achieved, the primary extract was charged to the distiller with a rate of 4-5 mL min. 79.7 g distillate was collected (81.1 a%, about 80 wt%), which was slowly dissolved in n-pentane at room temperature and normal pressure (101 325 Pa). HPLC analysis therein was carried out according to the method described in A.J. Aubin et al, "Separation of 16 Cannabinoids in Cannabis Flower and Extracts Using a Reversed-Phase Isocratic HPLC Method", Waters The Science Of What's Possible.^{™}, 2018 Waters Corporation, USA, article no. 720006426en (https://www.waters.com/webassets/cms/library/docs/720006426en.pdf).

After complete dissolution of the CBD distillate mixture in about 430 g of n-pentane, the mixture was cooled to 15 °C and 10 mg of ground seeding crystals were added. The mixture was then cooled with 4 K/h to -21 °C, and stirred at this temperature for a further 5 h.

The resulting suspension was filtered off using a glass frit (P3), washed with about 60 g of n-pentane, and precooled at -15°C. This resulted in 67.3 g of wet filter cake. After subsequent drying overnight at 30°C under vacuum, 54.5 g of white powder was obtained, with 98.1 wt% CBD, purity of 97.9 a%, for an overall yield of 53%.

### Example 2

Extraction of the primary extract with heptane, and subsequent isolation

An Erlenmeyer flask was charged with 150 g of primary extract, and 610 g of n-heptane. The mixture was mounted on a rotary shaker, and shaken for more than 6 hours. The resulting mixture was filtered, and the filtrate was reduced to less than 3 % solvent, yielding 145 g of extract, containing 98 g of CBD.

A short-path distillation apparatus was charged with the concentrated filtrate which was heated to 60°C, the same temperature as the cooling coil. Jacket temperature of the short-path distiller was set at 75 °C, and the pressure was reduced to 0.01 mbar.

After stable conditions were achieved, the primary extract was charged to the distiller with a feeding rate of 4-5 mL min. 110 g of distillate was collected (83.0 a%, about 81 wt% ), which was slowly dissolved in n-pentane at room temperature.

After complete dissolution of the CBD distillate mixture in 550 g n-pentane, the mixture was cooled to 15 °C, and 10 mg of ground seeding crystals were added. The mixture was then cooled with 4 K/h to -21 °C, and stirred at this temperature for a further 5 h.

The resulting suspension was filtered off using a glass frit (P3), washed with about 80 g of n-pentane, precooled at -15°C. This resulted in 86.3 g of wet filtercake. After subsequent drying overnight at 30°C under vacuum, 70.0 g of white powder was obtained, with 98.1 wt% CBD, purity of 97.9 a%, for an overall yield of 70%.

### Examples 3:

### Pretreatment with n-pentane.

In a 500 mL Erlenmeyer flask, 50 g of crude extract and 200 g of pentane were added. The resulting mixture was shaken for 72 h on an orbital shaker, and subsequently filtered using a 10-16 micron pore size filter. The clear mother liquor was used for further processing, and 2.7 g of residue containing the impurities was removed from the filter. The further steps were carried out as in Example 2.

### Example 4

### Pretreatment with n-hexane

In a 500 mL Erlenmeyer flask, 50 g of crude extract and 210 g of hexane were added. The resulting mixture was shaken for 72 h on an orbital shaker, and subsequently filtered using a 10-16 micron pore size filter. The clear mother liquor was used for further processing, and 3.2 g of residue containing the impurities was removed from the filter. The further steps were carried out as in Example 2.

### Example 5

### Pretreatment with n-heptane

In a 500 mL Erlenmeyer flask, 50 g of crude extract and 200 g of heptane were added. The resulting mixture was shaken for 72 h on an orbital shaker, and subsequently filtered using a 10-16 micron pore size filter. The clear mother liquor was used for further processing, and 4.7 g of residue containing the impurities was removed from the filter. The further steps were carried out as in Example 2.

### Example 6

### Optimizations

### Purification of primary extracts (primary oil)

Independently of the way of preparation of the primary extract, the inventors have found that distillation is the most effective and cost saving way to separate and purify the different components of a hemp or cannabis plant primary extract (primary extract). However, the drawbacks as described above make it necessary to include long, ineffective columns or to perform more than one distillation, which makes the distillation less efficient.

The efficiency of different ways of the purification has exemplarily been shown on the isolation of CBD in a primary oil. Table 2 shows comparative and exemplary results of different ways to purify the primary extract without and with using the present invention.

**Table 2 Comparison experiments**

| No. | Way of Purification | Amount Primary oil [g] | Amount of CBD in primary oil [g] | Yield after purification [g] | Yield after purification [%] | Purity after purification. [wt%] |
|---|---|---|---|---|---|---|
| 1 | Direct Crystallization | 10 | 6.3 | 0 | N/A | N/A* |
| 2 | 1. pretreatment | 10 | 6.3 | 2.1 | 31% | 91.6 % |
| | 2. Crystallization | | | | | |
| | 3. 2^{nd} Crystallization | | | | | |
| 4 | 1. short-path distillation | 100 | 66.7 | 35.4 | 53% | 99.4 % |
| | 2. Crystallization | | | | | |
| 5 | 1. pre-extraction | 100 | 66.4 | 42.7 | 63% | 99.4% |
| | 2. short-path distillation | | | | | |
| | 3. Crystallization | | | | | |

| | | | | | | |
|---|---|---|---|---|---|---|
| *No direct crystallization possible | | | | | | |

The inventors have now found that a - second - extraction of the primary extract with a non-polar solvent before performing distillation, here also called "pretreatment" or "pre-extraction" improves the yield and purity of the resulting product as it eases the distillation step.

Table 3 shows the improvements in the yield as an average on different experiments. HPLC analysis was therein carried out as above.

**Table 3 Comparison of Comparative Examples and Examples**

| Pre-treatment | Yield | | | | Purity | |
|---|---|---|---|---|---|---|
| | After pre-treatment (%) | After short-path distillation (%) | After crystallization (%) | Overall, average (%) | Distillate | After crystallization |
| Without | - | 61 - 69 | 72 | 47 | 79 - 81a% | 97.9-99.3a% |
| With | 97 | 85 - 91 | 72 | 61 | 82- 83 a% | 97.9-99.3a% |

In addition to having an overall higher yield, the isolated CBD obtained after the process as described in entry 2, Table 3, is typically whiter and does not stick, as opposed to the material obtained from a process without pretreatment. In procedures that are not according to the teaching of the invention the solid CBD remains slightly tacky, and has an off-white appearance.

In further experiments, the inventors have found that the amount of primary oil in relation to the solvent also has an effect on the yield of the extraction with the non-polar solvent. Surprisingly, a lower amount of solvent leads to a higher yield of purification. The following table shows the amount of CBD that may be extracted by n-heptane out of a primary extract containing 63.75 wt% of CBD.

**Table 4 Comparison of yield for different solvent amounts**

| No. | Equivalents (Solvent/Extract) | Amount primary oil [g] | Content CBD [wt%] | CBD after extraction [g] | Yield of purification [wt%] |
|---|---|---|---|---|---|
| 1 | 3.4 | 501.9 | 63.75 | 301.08 | 94.1 |
| 2 | 4 | 9.91 | 63.75 | 5.94 | 94.02 |
| 3 | 6.1 | 8.8 | 63.75 | 5.19 | 92.55 |
| 4 | 8 | 8.35 | 63.75 | 4.02 | 75.51 |

Therefore, in a preferred embodiment, the solvent to primary extract ratio is 6.5 or lower, preferably 6 or lower, further preferably 4 or lower.

In further experiments, the inventors found that the temperature of the extraction medium has an impact on the amount of organic compounds transferred into the second extract.

In Table 5, the crude oil with a purity of 64.7 wt% CBD is extracted at different temperatures with n-heptane at a solvent/primary oil-ratio of 5. The purity of the secondary extract and the yield are documented (HPLC-measurement as above). The higher the temperature, the higher the yield. The purity of the extract is surprisingly only minor affected.

**Table 5 Effect of temperature**

| T (°C) | Extract in (g) | Residue (g) | CBD out (g) | CBD Purity out (a%) | CBD Yield (%) |
|---|---|---|---|---|---|
| 20 | 50 | 6.47 | 28.8 | 79.70% | 90.50% |
| 30 | 51.1 | 4.89 | 30.9 | 79.70% | 94.80% |
| 40 | 50.9 | 4.45 | 31.2 | 79.60% | 96.10% |
| 50 | 49.7 | 4.07 | 31.4 | 79.30% | 99.30% |

Higher temperatures yield a higher CBD content of the secondary extract. At a temperature of 50 °C or more, about 4 % of unwanted material is separated (residue) and almost no CBD is lost. Therefore, in a preferred embodiment, the temperature of the extraction is 20 °C or more, more preferred 30 °C or more and even more preferred 40 °C or more. In the most preferred embodiment, the temperature of the extraction is 50 °C or more.

It is noted that agitation of the mixture may support the extraction of the primary extract. Different non-polar solvents have been proven to be possible for the extraction of the primary extract at room temperature (20-25 °C). It can be shown that pentane, hexane and also heptane have excellent separating properties, as shown in Table 6. With the use of heptane, the residual unwanted portion is the largest when compared to other non-polar solvents, meaning that separation is most efficient. Surprisingly, the desired compound is predominantly found in the second extract, while the residue contains the predominant portion of the unwanted by-products of the primary extraction from the plant itself, even if the primary extraction is a less expensive extraction without using winterizing, chromatography or other cost intensive means.

**Table 6 Influence of solvent in second extraction**

| Solvent | Residue (wt%) |
|---|---|
| n-pentane | 5.4 % |
| n-hexane | 6,4 % |
| n-heptane | 9,3 % |

Heptane is therefore the preferred solvent for the extraction of the primary extract.

The inventors have shown the impact of a pre-treatment of a primary extract with a non-polar solvent for the isolation of CBD; further, Table 7 shows that most of the desired compounds in the primary extract are separated from the unwanted ingredients of the primary extract with high yields. The results were obtained using n-heptane with 3.4 equivalents (Table 4, No. 1).

| Compound | **Crude Oil** | | **Pre-treated oil** | | **Residue** | | Yield |
|---|---|---|---|---|---|---|---|
| | wt% | g | wt% | g | wt% | g | % |
| CBD | 63.75 | 319.95 | 62.87 | 301.08 | 31.51 | 10.81 | 94.1 |
| CBN | 0.18 | 0.91 | 0.16 | 0.78 | 0.10 | 0.03 | 86.0 |
| Δ9-THC | 2.01 | 10.09 | 1.98 | 9.48 | 0.97 | 0.33 | 94.0 |
| CBDV-C3 | 0.66 | 3.30 | 0.68 | 3.24 | 0.36 | 0.12 | 98.2 |
| CBDVA-C3 | 0.29 | 1.47 | 0.30 | 1.41 | 0.17 | 0.06 | 96.2 |
| CBDA | 1.12 | 5.63 | 0.71 | 3.40 | 3.73 | 1.28 | 60.3 |
| CBG | 2.44 | 12.23 | 2.45 | 11.75 | 1.97 | 0.68 | 96.1 |
| Δ⁸-THC-C₅ | 0.76 | 3.83 | 0.75 | 3.59 | 0.18 | 0.06 | 93.6 |
| CBC | 5.91 | 29.68 | 5.87 | 28.11 | 3.11 | 1.07 | 94.7 |

The method of the invention may therefore also be used for the isolation of other compounds like Δ9-THC or other compounds, depending on the nature and composition of the primary extract.

The inventors have found a new way to effectively purify organic cannabinoid compounds from hemp or cannabis plant extracts by distillation.

## Claims

1. A method for separation of at least one organic compound from a primary extract, obtained from hemp and/or another plant from the Cannabaceae family, preferably the genus Cannabis, and/or a part of the plant, comprising:
- obtaining or providing the primary extract, particularly obtained from a first extraction step;
- extracting the primary extract in a second extraction step with a non-polar solvent to obtain a secondary extract, comprising the non-polar solvent and the at least one organic compound; and
- distilling the secondary extract or at least a part thereof to obtain the at least one organic compound.

2. The method according to claim 1, wherein the distilling of the secondary extract or at least a part thereof comprises subjecting the secondary extract or at least a part thereof to a short-path distillation apparatus.

3. The method according to claim 1 or 2, wherein the non-polar solvent contains one or more linear, branched and/or cyclic alkyl compounds.

4. The method according to claim 3, wherein the non-polar solvent contains pentane, hexane, and/or heptane.

5. The method according to one of the preceding claims, wherein the provided primary extract is an ethanol extract.

6. The method according to one of the preceding claims, wherein the primary extract is obtained by the steps of:
- extracting hemp and/or another plant from the Cannabaceae family, and/or the part of the plant, in a first extraction step to obtain the primary extract.

7. The method according to claim 5 or 6, wherein the first extraction step is performed at temperatures above -30 °C.

8. The method according to one of the preceding claims, wherein the second extraction step with the non-polar solvent is performed and the second extract is obtained at a temperature of 20 °C or more.

9. The method according to one of the preceding claims, wherein the secondary extraction step provides an organic phase as the secondary extract and a first residue, wherein the organic phase is separated from the first residue and the organic phase is distilled to obtain the at least one organic compound.

10. The method according to claim 9, wherein the non-polar solvent is at least partially removed from the organic phase prior to the distillation.

11. The method according to one of the preceding claims, wherein the at least one organic compound is crystallized after the distillation of the secondary extract or part thereof.

12. The method according to one of the preceding claims, wherein the at least one organic compound is cannabidiol, and wherein the second extraction step is carried out with an alkane having 5 to 10 C atoms.

13. The method according to one of the preceding claims, wherein the ratio of the non-polar solvent to the primary extract is 6.5 or lower.

14. A method for separation of at least one organic compound from hemp and/or another plant from the Cannabaceae family, preferably the genus Cannabis, and/or a part of the plant, comprising:
- extracting hemp and/or another plant from the cannabaceae family and/or part of the plant in a first extraction step to obtain a primary extract;
- extracting the primary extract in a second extraction step with a non-polar solvent to obtain a secondary extract, comprising the non-polar solvent and the at least one organic compound;
- optionally distilling off the non-polar solvent at least partially from the secondary extract; and
- distilling the secondary extract to obtain the at least one organic compound, particularly wherein the distilling of the secondary extract comprises subjecting the secondary extract to a short-path distillation apparatus,
wherein the first extraction step is carried out with a solvent and/or means different from the non-polar solvent used in the second extraction step.

15. A method for isolating cannabidiol (CBD) and/or 9-tetrahydrocannabinol (THC) from a primary extract from hemp and/or another plant from the Cannabaceae family, preferably the genus Cannabis, and/or a part of the plant, consisting of the following steps:
a. extracting the primary extract in a second extraction step with an alkane having 5 to 10 C atoms, preferably heptane, to produce an organic phase and a first residue;
b. separating the organic phase from the first residue;
c. distilling off the alkane from the organic phase to obtain a second residue;
d. subjecting the second residue from step c. to a short-path distillation to obtain a distillate; and
e. subjecting the distillate of step d. to a crystallization, preferably in pentane and/or petrol ether, to obtain the cannabidiol and/or 9-tetrahydrocannabidiol.
